# FASCICULE DE BREVET EUROPEEN

(11) **EP 0 299 009 B1**
(45) Date de publication et mention de la délivrance du brevet: **18.08.1993**
(21) Numéro de dépôt: 88900698.7
(22) Date de dépôt: 30.12.1987
(51) Int. Cl.: C12P 7/06

(54) **PROCEDE D'OBTENTION DE BOISSONS ALCOOLISEES A PARTIR D'UN JUS VEGETAL**
VERFAHREN ZUR HERSTELLUNG VON ALKOHOLISCHEN GETRÄNKEN AUS EINEM PFLANZLICHEN SAFT
METHOD FOR PREPARING ALCOHOLIC DRINKS FROM VEGETABLE JUICE

(30) Priorité: 09.01.1987 FR 8700232
(43) Date de publication de la demande: 18.01.1989
(73) Titulaire: LA COMPAGNIE VITICOLE ET FERMIERE EDMOND ET BENJAMIN DE ROTHSCHILD S.A., CH-1211 Genève 11 (CH)
(72) Inventeur: COLIN, Gérard, F-33330 St-Emilion (FR); CONROY, Micha[l, F-33360 Cénac (FR)
(74) Mandataire: CABINET BONNET-THIRION
(86) Numéro de dépôt international: FR8700523
(87) Numéro de publication internationale: WO8805084

(56) Documents cités:
- GB-A- 2 060 688
- US-A-43 616 51
- Annals of the New York Academy of Sciences.vol.369,1981,Biochemical Engineering II,(New York,US),Ting Shiang Lee et al.:"Membrane separations in alcohol production",pages 367-381,see pages 367-368
- Chemical Abstracts,vol.101,No.17,22 October 1984,(Columbus,Ohio,US),M.Serrano et al.:"Use of tangential microfilters in enology",see page 558,abstract 149718b,& Connaiss. Vigne Vin 1984,18(2),135-54
- G. Troost:"Technologie des Weines",5th edition,1980,published by E. Ulmer (Stuttgart,DE)pages 152-154,see pages153,last paragraph - page 154,paragragh 3

## Description

L'invention a trait à un procédé d'obtention de boissons alcoolisées à partir d'un jus végétal issu d'au moins un végétal (voir Connaissance Vigne et Vin (1984) N^{o}2, pages - 135-154 Utilisation d'un microfiltre tangentiel en oenologie).

Le jus végétal le plus utilisé pour obtenir une boisson alcoolisée par fermentation alcoolique est le jus de raisin.

La vinification est constituée par l'ensemble des techniques utilisées pour transformer le raisin en vin.

Après la vendange le raisin est apporté à la cave ou au cellier où il subit plusieurs traitements successifs et différents suivant que l'on désire obtenir un vin rouge, blanc ou rosé. Les opérations de vinification peuvent être classées en trois parties : traitement mécanique de la vendange; fermentation; conservation et vieillissement du vin.

Le but du traitement mécanique de la vendange est dans le cas d'une vinification en vin blanc de diminuer les échanges entre matière solide (rafles, pellicules, pépins) et le liquide. Ainsi pour l'obtention d'un vin blanc, les raisins blancs ou noirs sont amenés à la cave et immédiatement soumis au pressurage après avoir été éventuellement passés au fouloir-égrappoir. Le moût légèrement sulfité peut être soumis à l'opération de débourbage avant d'être mis en fermentation.

Le débourbage consiste à séparer les grosses impuretés (terre, débris organiques) du moût avant la mise en fermentation. Cela signifie que le jus ainsi obtenu pourra contenir des solides en suspension avant la mise en fermentation.

Un autre jus végétal très utilisé pour obtenir une boisson alcoolisée est le jus de canne obtenu par pressurage et par épuisement à l'eau des sucres de la canne. Ce jus dilué qui contient environ 70g de sucre par litre, est fermenté puis distillé et réduit pour donner des rhums agricoles.

Ces rhums présentent tous la particularité d'avoir une teneur en non-alcool relativement importante. Les non-alcools sont, par convention, constitués par toutes les substances volatiles autres que l'éthanol telles que par exemple, les aldéhydes, les esters, les alcools supérieurs, le furfural, l'acidité volatile, etc... même les rhums dits légers ont une teneur en non-alcool toujours supérieure à 60 g par hectolitre d'alcool pur, dans le cadre de la réglementation française actuelle.

A la différence du jus de raisin, jusqu'à maintenant le jus de canne n'a pas été fermenté tel quel, en vue de l'obtention de façon industrielle d'un vin directement consommable titrant 10 à 11 % vol d'éthanol.

Enfin il existe d'autres jus de végétaux, comme les jus de légumes, agrumes et fruits divers comme par exemple melons, abricots, mangues, ananas, qui bien que très riches en arômes ne sont pas utilisés pour la fabrication de vins par fermentation de leur jus car jusqu'à maintenant celle-ci n'était pas maîtrisée et conduisait à des développements bactériens au détriment de la fermentation alcoolique par levures. Par contre ces derniers jus sont utilisés comme boissons non fermentées.

Ainsi à l'heure actuelle il existe des filières d'utilisation de jus végétaux bien distinctes les unes des autres. La présente invention a pour but de créer une nouvelle filière qui à partir d'un jus végétal suffisament riche en sucre puisse conduire à de nouvelles boissons alcoolisées. Par jus végétal il faut entendre soit un jus obtenu d'un seul végétal comme par exemple la canne ou un jus obtenu par combinaison de plusieurs végétaux comme par exemple la canne et le pamplemousse, la canne et l'ananas, le raisin et un ou plusieurs légumes etc...

Par nouvelle boisson alcoolisée on entend une boisson ayant des propriétés organoleptiques nouvelles et attractives pour un échantillon statistiquement significatif de consommateurs.

Dans le domaine oenologique il est encore impossible de caractériser les vins par leurs compositions, car celles-ci sont trops complexes. En effet, on a identifié environ cinq cent constituants différents dans un vin de raisin.

Aussi la solution du problème posé résulte en un procédé d'obtention de boissons alcoolisées à partir d'un jus végétal contenant naturellement au moins un sucre fermentescible caractérisé en ce que :
a) on prend un jus végétal, obtenu par pressurage d'au moins un végétal de façon que la teneur en sucres fermentescibles du jus végétal soit comprise entre 80 et 230 g/litre, dont on règle le pH entre 3,5 et 4,3 avant de le sulfiter puis de le clarifier en éliminant toute matière en suspension d'une taille supérieure à 1 mm ;
b) on soumet ce jus clarifié à une microfiltration sur membrane ayant une porosité dans la gamme de 0,2 à 0,45 µm et on le divise en deux parts : une part majeure et une part mineure ;
c) avec la part mineure on constitue un levain par culture aérobie d'une levure sélectionnée ;
d) on ajoute ce levain à la part majeure du jus microfiltré et on conduit une fermentation alcoolique entre 20 et 28°C, sous atmosphère de gaz carbonique.

Ce procédé a l'avantage d'être strictement contrôlé donc de permettre une bonne reproductibilité. Le pH est réglé à ces valeurs ci-dessus de préférence par l'ajout d'un ou plusieurs acides organiques habituellement utilisés en matière alimentaire ou par addition d'un jus de fruit fortement acide notamment jus de citron ou de pamplemousse. La microfiltration sur membrane ayant une porosité dans la gamme de 0,2 à 0,45 µm est un des moyens essentiels du procédé. Après cette microfiltration le jus est exempt de particules solides en suspension.

D'une manière inattendue cette absence de particules solides dans le filtrat conduit à une boisson alcoolisée ayant de nouvelles propriétés organoleptiques.En effet une grande partie des composés aromatiques semble liée aux fibres cellulaires éliminées par la microfiltration.

De plus des jus de toute consistance peuvent être réunis après pressurage de leurs végétaux respectifs, ce qui permet de développer de nouvelles propriétés organoleptiques à partir des seuls constituants qui passent à travers la membrane ayant une porosité dans la gamme de 0,2 à 0,45 µm. Cela présente un intérêt considérable en ce qui concerne le jus de canne, car la plus grande partie des composés aromatiques assez grossiers liés aux parois cellulaires de la canne ne passe pas dans le filtrat. Les constituants du filtrat sont ensuite éventuellement transformés sous l'action des levures en composés qui apportent leur note particulière à la boisson obtenue.

De plus, une microfiltration à l'aide d'une membrane de porosité 0,2 µm à la propriété d'éliminer du filtrat toutes les bactéries et levures endogènes et de conduire ainsi à un jus végétal stérile. Cette porosité de 0,2 µm est donc dans le procédé de l'invention préférée à toute autre porosité de taille supérieure.

Cependant, il est également possible d'utiliser une membrane de porosité 0,45 µm qui laisse passer quelques microorganismes notamment de petites bactéries dans le filtrat. Cela n'est pas gênant dans la mesure ou ces microorganismes peu nombreux restent inhibés par le pH acide du milieu et par la présence d'anhydride sulfureux. A titre de précaution supplémentaire, il est possible de refroidir la part majeure du filtrat en attente d'ensemencement par le levain. Cette part majeure est alors réchauffée juste avant l'ajout du levain. Cet ajout réalise un apport brutal d'une énorme population de levures sélectionnées qui maintiennent en inhibition les quelques microorganismes désormais en nombre très minoritaire.

Ainsi le résultat obtenu sur le plan organoleptique, selon le procédé de l'invention où l'on obtient des composés aromatiques et de sapidité, notamment l'acidité, l'amertume, le sucré et le salé, propres à chaque végétal, est différent de celui que l'on obtiendrait par l'ajout d'extraits aromatiques de végétaux à un jus après la fermentation de ce dernier.

Dans la mesure où la teneur en sucres fermentescibles est suffisante, la fermentation alcoolique peut être conduite jusqu'à un degré alcoolique compris entre 2 % et 14 % d'éthanol en volume limites comprises.

Une certaine teneur x en sucre fermentexible peut conduire jusqu'à une teneur y % vol en alcool si les levures en fermentation anaérobie ne sont pas carencées en vitamines et en substances azotées. Au besoin on ajoute de la biotine et des sels d'ammonium au jus avant la fermentation. La fermentation peut être stoppée entre 2 % vol et y % vol par élimination des levures de fermentation ou par pasteurisation.

Afin de ne pas avoir des pertes d'arômes incontrôlées et/ou un métabolisme incontrôlé des levures pendant la fermentation, celle-ci a lieu dans une cuve fermée ou dans une cuve close, à une température de fermentation régulée de préférence entre 20 et 28°C.

La cuve close permet de maintenir au moins une partie du gaz carbonique formé en solution dans la boisson qui est ainsi pétillante.

Le procédé général de l'invention où le jus végétal comporte un jus obtenu par pressurage de la canne à sucre et où la fermentation est conduite jusqu'à son terme naturel donne une boisson alcoolisée titrant 10 à 11 % vol, de type vin blanc, à faible taux de non alcool, qui peut être avantageusement soumis à une distillation-rectification pour donner un alcool titrant entre 92 % et 96 % vol avec une teneur en non-alcool inférieure à environ 40 g par hectolitre d'alcool pur. Par réduction de cet alcool on obtient un pur esprit naturel de canne à sucre qui a des propriétés organoleptiques nouvelles et très agréables tout en ayant une très faible teneur en non-alcool même par rapport à un rhum léger.

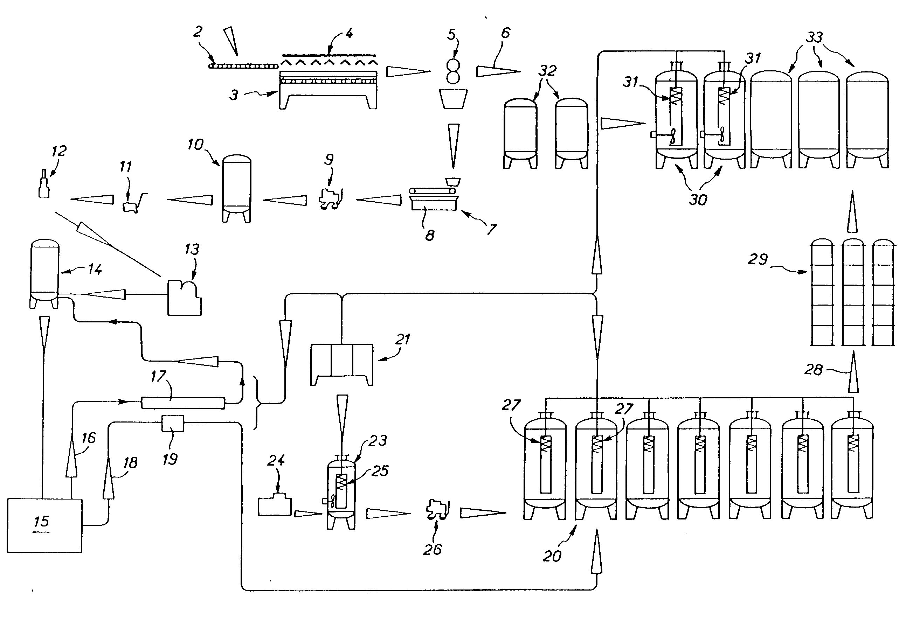

Les caractéristiques et avantages de l'invention ressortiront d'ailleurs de la description d'exemples de réalisation où l'exemple 5 sera décrit en référence au dessin annexé qui illustre une installation utilisant le procédé de l'invention.

### EXEMPLE 1. Elaboration d'un vin de canne.

On presse des cannes préalablement lavées et séchées à l'aide d'un seul jeux de rouleaux pour obtenir un jus de densité 1075 contenant 175 g de sucres fermentescibles par titre et de pH égal à 4,85. (Par convention la densité du jus est rapportée à celle de l'eau pure considérée comme étant de 1 000).

On prélève 11 hl de ce jus et on abaisse son pH à 4,21 par addition de 275 g d'acide citrique et 275 g d'acide tartrique.

Le jus est protégé de l'oxydation et d'une altération microbienne avant la clarification en lui ajoutant 55 g d'anhydride sulfureux. Le jus est ensuite centrifugé à l'aide d'une centrifugeuse ayant un débit de 15 hl/heure pour éliminer toute matière en suspension d'une taille supérieure à 1 mm, le jus résultant est soumis à une microfiltration tangentielle sur membrane minérale de porosité 0,2 µm à l'aide d'un appareil IMECA, avec un débit de microfiltration de 10 hl/heure.

On prélève une part mineure de 2 hl de ce jus microfiltré et on l'ensemence par 40 g de levures saccharomycès cérévisiae contenant 4.10⁶ levures par cm³. Lorsque le levain a une concentration en levure comprise entre 10⁷ et 10⁸ levures par cm³ et que la population des levures est en phase de croissance on l'ajoute à la part majeure de 9 hl du jus microfiltré conservé entre temps dans des conditions aseptiques. Le volume du levain ajouté représente environ 22 % du volume de la part majeure du jus microfiltré.

(Au lieu de ces 22 % toute valeur comprise entre 10 et 25 % peut être utilisée comme rapport du volume du levain ajouté à celui de la part majeure). On ajoute ensuite 275 g de phosphate d'ammonium.

La phase de fermentation proprement dite commence alors dans une cuve thermostatée de façon à ce que la température du milieu reste comprise entre 20 et 28°C jusqu'à l'épuisement des sucres fermentescibles. La fermentation alcoolique est ainsi conduite jusqu'à son terme naturel.

La cuve fermée non étanche a permis de maintenir en surface du moût une atmosphère de CO₂.

Un dosage des sucres indique bien que la fermentation ne pouvait pas se poursuivre. On ajoute alors environ 88 g d'anhydride sulfureux pour stabiliser cette boisson alcoolisée des risques d'oxydation et d'altération bactérienne.

L'analyse de ce produit a donné les résultats suivants :
- pH = 3,57
- Titre alcoométrique 11,6 % vol.
- Absence d'acide lactique
- Acidité volatile équivalente à 0,27 g/l de H₂ SO₄.

### EXEMPLE 2. Elaboration d'une boisson alcoolisée à partir de jus de canne et de jus de citron vert.

Un jus de pressurage de la canne à sucre identique à celui de l'exemple 1 (c-a-d d'une densité de 1075, d'un pH de 4,85 et contenant 175 g de sucres fermentescibles par litre) est acidifié à pH 4,3 par ajout de jus de citron vert en une quantité de 0,5 l par hectolitre de jus de canne. Le jus résultant est soumis alors exactement au même procédé que dans l'exemple 1.

L'analyse du produit obtenu a donné les résultats suivants :
- pH = 3,39
- Titre alcoométrique 11 % vol.
- Absence d'acide lactique
- Acidité volatile équivalente à 0,18 g/l de H₂ SO₄.

### EXEMPLE 3. Elaboration d'une boisson alcoolisée à partir de jus de canne et de pamplemousse.

On presse des cannes préalablement lavées et séchées à l'aide d'un seul jeux de rouleaux pour obtenir un jus de densité 1075 contenant 175 g de sucres fermentescibles par litre et de pH égal à 4,85. On acidifie ce jus par de l'acide citrique (25 g/hl de jus) et de l'acide tartrique (25 g/hl de jus) à un pH égal à 4,21. On ajoute alors 5 % de jus fraichement pressé de pamplemousse entier (pourcentage en volume par rapport au volume du jus de canne). Cette addition abaisse le pH à 3,85. On ajoute de l'anhydride sulfureux à raison de 5 g/hl de jus. Le jus résultant est clarifié et microfiltré sur un filtre de porosité égale à 2 µm. Le jus microfiltré est divisé en une part mineure et une part majeure. La part mineure est utilisée pour la préparation d'un levain en utilisant Saccharomyces cerevisiae. Ce levain lorsque sa concentration atteint 5.10⁷ levures par cm³ est ajouté à la part majeure et la fermentation est conduite en cuve fermée jusqu'à épuisement des sucres fermentescibles. L'analyse du produit obtenu après la cessation de la fermentation a donné les résultats suivants :
- pH = 3,38
- Titre alcoométrique 10,8 % vol.
- Acidité volatile équivalente à 0,18 g/l de H₂SO₄.

Cette boisson est stabilisée par 8 g d'anhydride sulfureux par hectolitre.

Elle présente alors des caractères organoleptiques très typiques : aromes de pamplemousse et une certaine amertume en bouche.

### EXEMPLE 4. Elaboration de boissons alcoolisées à partir de jus de melon.

On pressure des melons pelés pour obtenir 12 litres de jus.

Ce jus à la composition suivante :
Fructose 15 g/l, glucose 11 g/l, saccharose 57 g/l (soit un total de 83 g de sucres fermentescibles).

Ce jus est acidifié par 1,5 g/l d'acide citrique et 1,5 g/l d'acide tartrique. Le pH est alors de 4,30. On y ajoute 50 mg/l d'anhydride sulfureux avant de le clarifier sur un tamis de 0,3 mm. Le jus clarifié résultant est filtré sur membrane de 10 µm puis microfiltré sur une membrane de 0,2 µm. Le jus microfiltré est congelé à -4°C à titre de précaution supplémentaire, sauf 3 litres qui sont utilisés pour l'élaboration du levain. A ces trois litres on ajoute 600 mg de levures sèches saccharomyces cerevisiae. Le lendemain la population des levures est en phase de croissance et atteint 10⁸ levures par cm³. Le levain est alors ajouté à la part majeure (9 l) du jus décongelé réchauffé à 20°C et le tout est laissé fermenter à 20°C pendant deux jours, sous une atmosphère de gaz carbonique. On utilise pour cette fermentation un réservoir en verre de 15 litres muni d'un barboteur de façon à conserver une atmosphère de CO₂ au-dessus du jus.

Le jus ayant atteint la densité de 1010, on en soutire une fraction A de 4 litres qui est immédiatement pasteurisée de façon à stopper la fermentation alcoolique. Le reste du jus, soit la fraction B, termine sa fermentation jusqu'à son terme naturel. On y ajoute alors 80 mg/l de SO₂.

Les produits ainsi obtenus présentent les compositions suivantes :

### Fraction A. Boisson non totalement fermentée

- pH = 4,10
- Titre alcoométrique = 2,8 % vol.
- Sucres fermentescibles = 38 g/l
- Acidité volatile équivalente à 0,15 g/l de H₂SO₄.

### Fraction B. Boisson totalement fermentée

- pH = 4,02
- Titre alcoométrique = 5,0 % vol.
- Sucres fermentescibles inférieurs à 1 g/l
- Acidité volatile équivalente à 0,20 g/l de H₂ SO₄.

### EXEMPLE 5. En se reportant à la figure unique, on distingue un schéma de principe d'une installation pour une mise en oeuvre du procédé selon l'invention.

Les cannes à sucre sont coupées à la main, sans recourir à la technique de l'effeuillage préalable par brûlage afin d'éviter tout endommagement physique de la tige tel qu'écrasement ou atteinte quelconque qui pourrait permettre une contamination de l'intérieur de la canne par des microorganismes.

Les tiges sont, de préférence après le transport jusqu'au site de l'installation, effeuillées, coupées à une longueur d'environ 1,20 m et placées sur la table de préparation 2.

La table 2 est un convoyeur à chaînes et barreaux en acier inoxydable chargé d'amener les tiges de canne à sucre à une table de lavage 3 constituée par un convoyeur horizontal à claire-voie, au-dessus duquel sont disposées des rampes 4 de pulvérisation d'eau potable. Le lavage est destiné à enlever les diverses souillures et particules de terre des tiges.

Après le lavage, les tiges de canne à sucre subissent une extraction du jus par passage dans un seul moulin 5 à rouleaux. On obtient ainsi un jus de première presse d'une densité d'environ 1080 et à forte teneur en sucres fermentescibles (188 g/l).

Il faut noter qu'entre le lavage et le passage dans le moulin 5 les tiges de canne peuvent éventuellement subir un séchage.

Les bagasses sortant du moulin 5 ne sont pas reprises en vue de les épuiser mais évacuées en 6.

Le jus obtenu par pressurage en 5 est donc du pur jus de canne qui est ensuite soumis à une clarification en plusieurs étapes. Ici on opère un dégrillage dans un système séparateur 7 avec auge et vis tubée de récupération des matières solides. Le jus passe à travers un tamis à mailles oblongues d'environ 2 X 15 mm et est collecté dans un bac 8 placé sous le séparateur 7.

Une sonde de mesure du pH est placée dans le bac 8 et permet une sélection des jus. En effet seul les jus présentant un pH compris entre environ 5,2 et environ 5,4 seront retenus, en dehors de ces limites le jus sera éliminé et l'installation amont arrêtée. On considère, en effet, qu'au-delà d'un pH de 5,4 ou en deçà d'un pH de 5,2 c'est le signe d'une souillure ou d'une dégradation du jus.

A la sortie du séparateur 7, le jus est envoyé par une pompe à piston 9 dans une cuve de stockage intermédiaire 10. La pompe 9 sert également à éliminer le jus considéré comme non conforme suivant les indications de la sonde de mesure de pH précédente. A cet effet, la pompe 9 est équipée au refoulement d'un T de dérivation avec vannes permettant la sélection des jus en fonction de leur pH.

On effectue entre la pompe 9 et la cuve 10, un ajustage ou réglage du pH entre 3,5 et 4,3 ainsi qu'un sulfitage à l'aide d'anhydride sulfureux pour protéger le jus contre un départ précipité en fermentation. Le SO₂ agit à la fois comme un agent antioxydant et un antibiotique.

Le réglage du pH s'effectue à l'aide d'un autre jus acide tel que le jus de citron ou le jus de pamplemousse ou d'orange ou par l'addition d'acides citrique et tartrique.

A la sortie de la cuve 10, le jus est repris par une pompe centrifuge 11 et envoyé, via un séparateur 12, dans une centrifugeuse 13. Cette centrifugeuse peut être de marque Westfalia type SA 20 60 076 avec une vitesse du bol de 6500 tr/min.

Le rôle du séparateur 12 est, en effectuant un nouveau tamisage du jus, de protéger la centrifugeuse 13. Le séparateur 12 est ici un auto-débourbeur à bol vertical équipé en tête d'un tamis autoclave à surface râclée, composé d'une grille à maille de 0,9 mm. On élimine ainsi toute matière en suspension d'une taille supérieure à 1 mm.

Le rôle de la centrifugeuse 13 est d'amener un jus clarifié à un dispositif de filtration tangentielle 15 sur membrane minérale de porosité égale à 0,2 µm.

Ce dispositif 15 peut être un appareil IMECA à boucle semi-fermée avec régulation pressostatique et système de filtration et de lavage en batch (par lots).

Cet appareil comporte quatre boucles de deux carters en série. Chaque carter contient 19 membranes de porosité 0,2 µm d'une surface totale de 30,4 m2. Le débit moyen d'entrée est de 50 hl/h.

La centrifugeuse 13 refoule directement les jus débourbés vers une cuve de stockage 14.

La centrifugeuse 13 est ici un surpresseur d'eau à hydro-cyclone.

La sortie des rétentats 16 du dispositif de filtration tangentielle 15 passe dans un échangeur thermique 17, cependant que la sortie des filtrats 18 passe dans un second échangeur thermique 19 et est envoyée à une batterie 20 de cuves fermées de fermentation.

Les échangeurs 17 et 19 sont alimentés en froid à partir d'une centrale de froid 21.

La filtration tangentielle échauffant les jus, les échangeurs 17 et 19 ont pour fonction de réfrigérer les rétentats et les filtrats.

L'envoi des rétentats dans la cuve 14, via l'échangeur 17, permet de maintenir le cas échéant les jus dans la cuve 14 à une température inférieure à 25°C environ.

Ainsi on obtient à l'entrée des cuves 20 un jus de canne limpide, stérile puisque débarrassé de toutes levures, bactéries et particules supérieures à 0,2 µm.

Cette qualité de pureté contrôlée remarquable du jus de canne est essentielle dans le procédé de l'invention car c'est elle qui permet ensuite, grâce à un ensemencement uniquement par des souches de levures exogènes sélectionnées d'obtenir le produit final recherché. On a choisit comme levures la souche Saccharomyces Cerivisiae d'origine INRA-Narbonne-CBS 6978 avec une population viable garantie de 25.109 cellules/g (Fermivin-Société Rapidase 59113 Seclin-France)
On peut choisir d'autres levures parmi celles qui sont commercialisées comme par exemple une souche différente de Saccharomyces Cerevisiae, ou Schizosaccharomyces Pombe.

Le jus entre dans les cuves 20 à environ 18°C.

L'ensemencement s'effectue de la manière suivante : un levain est préparé dans une cuve 23 dite de levurage.

A cet effet, du jus destiné aux cuves 20 est prélevé et envoyé dans la cuve de levurage 23. Les levures sélectionnées sont introduites dans la cuve 23 par un polydoseur 24.

La cuve 23 est munie d'un agitateur, d'une rampe d'injection d'air au coeur de levain pour assurer les conditions aérobies et d'un échangeur de chaleur 25 relié à la centrale de froid 21 pour que la culture aérobie ait lieu à une température comprise entre 20 et 28°C.

Le polydoseur 24 sert également à ajuster le pH du levain et à faire des ajouts éventuels, par exemple en matières azotées.

Le brassage et l'oxygénation qui s'opèrent dans la cuve 23 permettent aux levures de se multiplier. Cette multiplication peut être contrôlée par une numération sous microscope.

Le levain est préparé environ 24 heures avant son injection dans les cuves fermées 20. De préférence cette injection est effectuée lorsque la population des levures est en phase de croissance.

Le levain est envoyé par une pompe à piston 26 dans chaque cuve remplie de jus microfiltré, à raison de 10 à 25 % en volume de celui du jus microfiltré.

Les cuves 20 sont équipées chacune de sections d'échangeurs platulaires 27 reliés à la centrale de froid 21 et permettant un contrôle rigoureux des températures de fermentation de préférence comprise dans la gamme de 20 à 28°C.

Une partie des cuves 20 ne sont pas remplies de jus microfiltré fermentescible, mais sont affectées au soutirage des cuves 20 où ont lieu la fermentation.

Entre les deux groupes de cuve 20 ci-dessus on effectue avantageusement sur le jus fermenté une centrifugation pour éliminer les levures mortes. Cette centrifugation peut être suivie d'une microfiltration tangentielle sur une membrane de porosité 0,2 µm pour enlever les dernières traces de levures et de tout dépôt.

En sortie 28 de cuverie on a un vin de canne limpide ayant un degré alcoolique d'environ 10 à 11 % vol.

La température de ce vin de canne est, en sortie de cuve, de l'ordre de 18°C afin d'éviter les attaques bactériennes.

Ce vin de canne est envoyé dans une unité 29 de distillation-rectification d'un type connu en soi.

Cette unité est réglée pour l'obtention par exemple de deux types d'alcools, l'un à 96 % vol avec une teneur maximale en non-alcool de 9 g par hectolitre d'alcool pur et l'autre a 94 % vol avec une teneur en non-alcool comprise entre 10 et 15 g par hectolitre d'alcool pur.

L'alcool ainsi rectifié est ensuite dirigé vers deux cuves 30 de coupage équipées chacune d'une section d'échangeurs platulaires 31 reliés à la centrale de froid 21 et chargés de contenir les élévations de température apparaissant lors du coupage avec de l'eau fournie par des cuves 32.

L'eau provient d'un poste de déminéralisation a résines anionique et cationique (Parent Industrie). Cette eau a une résistivité de 200 000 ohms/cm2/cm.
Le coupage transforme les alcools rectifiés précédents en des boissons titrant 40 % vol. Ces boissons sont stockées dans des cuves 33. Elles possèdent des propriétés organoleptiques très agréables tout en ayant des propriétés physiologiques essentiellement dues à leur teneur en éthanol.

## Revendications

1. Procédé d'obtention d'une boisson alcoolique à partir d'un jus végétal contenant des sucres fermentescibles, qui prévoit l'obtention du jus par pressage, le réglage de son pH entre 3,5 et 4,3, la sulfitation du jus, l'addition à ce dernier d'un levain de levures sélectionnées et la conduite d'une fermentation alcoolique à la température comprise entre 20 et 28 °C jusqu'à son terme ou jusqu'à l'obtention du jus fermenté à un degré alcoolique choisi, caractérisé en ce que, dans le but d'améliorer les propriétés organoleptiques du produit fini, on utilise le jus dont la teneur en sucres est de 80 à 230 g/l ; avant la conduite de la fermentation alcoolique, le jus est clarifié par élimination de toute matière en suspension d'une taille supérieure à 1mm, on soumet ensuite le jus à une microfiltration sur membrane ayant une porosité de 0,2 à 0,45 µm et on le divise en deux parts inégales dont la part mineure est utilisée pour constituer un levain par culture aérobie d'une levure sélectionnée, tandis que la part majeure est soumise à la fermentation alcoolique sous atmosphère de gaz carbonique.

2. Procédé suivant la revendication 1, caractérisé en ce qu'on utilise Saccharomyces cerevisiae conme levure sélectionnée.

3. Procédé suivant la revendication 1, caractérisé en ce que le levain est ajouté à la part majeure du jus lorsque sa concentration en levure est comprise entre 10⁷ et 10⁸ levure par cm³ et que la population des levures est en phase de croissance.

4. Procédé suivant la revendication 1, caractérisé en ce que le volume du levain ajouté représente 10 à 25 % du volume de la part majeure du jus.

5. Procédé suivant la revendication 1, caractérisé en ce que la fermentation alcoolique est conduite jusqu'à un degré alcoolique compris entre 2 et 14 % en volume.

6. Procédé suivant la revendication 1, caractérisé en ce que l'on arrête la fermentation au degré alcoolique choisi par élimination des levures de fermentation.

7. Procédé suivant la revendication 1, caractérisé en ce que le jus fermenté est soumis à une distillation-rectification pour obtenir un distillat d'un degré alcoolique compris entre 94 et 96 % en volume.

8. Procédé suivant les revendications 1 et 7, caractérisé en ce que le distillat est soumis à un coupage avec de l'eau.

## Claims

1. A method of producing an alcoholic drink from a vegetable juice containing fermentable sugars which envisages obtaining juice by pressing, its pH being adjusted to between 3.5 and 4.3, sulphiting of the juice, the addition to this latter of a leaven of selected yeasts and the conduct of alcoholic fermentation at a temperature of between 20 and 28°C until its natural completion or until the juice obtained has been fermented to a selected alcoholic degree, characterised in that with a view to improving the organoleptic properties of the end product, the juice used has a sugar content of 80 to 230 g/litre; before the alcoholic fermentation is carried out, the juice is clarified by elimination of any suspended matter in excess of 1 mm. , the juice is then subjected to microfiltration over a membrane with a porosity of 0.2 to 0.45 µm and it is divided into two unequal parts, the smaller part of which is used to make up a leaven by aerobic culture of a selected yeast while the greater portion is subjected to alcoholic fermentation in an atmosphere of carbonic acid gas.

2. A method according to claim 1, characterised in that Saccharomyces cerevisiae is used as the selected yeast.

3. A method according to claim 1, characterised in that the leaven is added to the major part of the juice when its yeast concentration is comprised between 10⁷ and 10⁸ yeast per cc and when the yeast population is in the growth phase.

4. A method according to claim 1, characterised in that the volume of added leaven represents 10 to 25% of the volume of the major part of the juice.

5. A method according to claim 1, characterised in that alcoholic fermentation is carried out until the alcohol level is between 2 and 14% by volume.

6. A method according to claim 1, characterised in that fermentation is stopped at the selected alcoholic degree by elimination of the fermentation yeasts.

7. A method according to claim 1, characterised in that the fermented juice is subjected to distillation-rectification in order to obtain a distillate in which the level of alcohol is between 94 and 96% by volume.

8. A method according to claims 1 and 7, characterised in that the distillate is subjected to cutting with water.

## Patentansprüche

1. Verfahren zur Herstellung eines alkoholischen Getränkes aus einem fermentierbare Zucker enthaltenden, pflanzlichen Saft, welches die Gewinnung eines Saftes durch Pressen, die Einstellung seines pH-Wertes zwischen 3,5 und 4,3, die Schwefelung des Saftes, die Zugabe einer Hefe von ausgewählten Hefepilzen zu letzterem und die Durchführung einer alkoholischen Gärung bei einer Temperatur zwischen 20 und 28° C bis zu ihrem Ende oder bis zum Erhalt eines bis zu einem ausgewählten Alkoholgehalt vergorenen Saftes vorsieht, dadurch gekennzeichnet, daß man zum Zweck der Verbesserung der organoleptischen Eigenschaften des Endproduktes einen Saft verwendet, dessen Zuckergehalt von 80 bis 230 g/l beträgt; der Saft vor Durchführung der alkoholischen Gärung durch Entfernung aller suspendierten Stoffe mit einer Größe oberhalb von 1 mm geklärt wird, man anschließend den Saft einer Mikrofiltration über eine Membran mit einer Porosität von 0,2 bis 0,45 µm unterwirft und man ihn in zwei nicht gleiche Teile aufteilt, wovon der kleinere Teil verwendet wird, um eine Hefe durch aerobe Kultur eines ausgewählten Hefepilzes zu bilden, während der größere Teil der alkoholischen Gärung unter Kohlensäuregasatmosphäre unterworfen wird.

2. Verfahren nach Anspruch 1, dadurch gekennzeichnet, daß man Saccharomyces cerevisiae als ausgewählten Hefepilz verwendet.

3. Verfahren nach Anspruch 1, dadurch gekennzeichnet, daß die Hefe zu dem größeren Teil des Saftes zugesetzt wird, bis seine Konzentration zwischen 10⁷ und 10⁸ Hefezellen pro cm³ beträgt und seine Population an Hefepilzen in der Wachstumsphase ist.

4. Verfahren nach Anspruch 1, dadurch gekennzeichnet, daß das Volumen der zugesetzten Hefe 10 bis 25 % des Volumens des größeren Teiles des Saftes ausmacht.

5. Verfahren nach Anspruch 1, dadurch gekennzeichnet, daß die alkoholische Gärung bis zu einem Alkoholgehalt zwischen 2 und 14 Vol-% durchgeführt wird.

6. Verfahren nach Anspruch 1, dadurch gekennzeichnet, daß man die Gärung beim ausgewählten Alkoholgehalt durch Entfernung der Gärungshefepilze abbricht.

7. Verfahren nach Anspruch 1, dadurch gekennzeichnet, daß der vergorene Saft einer Destillation-Rektifikation unterworfen wird, um ein Destillat mit einem Alkoholgehalt zwishen 94 und 96 Vol.-% zu gewinnen.

8. Verfahren nach einem der Ansprüche 1 bis ,7, dadurch gekennzeichnet, daß das Destillat einem Verschnitt mit Wasser unterworfen wird.
